# EUROPEAN PATENT SPECIFICATION

(11) **EP 2 122 214 B1**
(45) Date of publication and mention of the grant of the patent: **24.08.2011**
(21) Application number: 08728372.7
(22) Date of filing: 28.01.2008
(51) Int. Cl.: F16K 1/52

(54) **VALVE FLOW ADJUSTMENT DEVICE**
VENTILFLUSS-ANPASSUNGSVORRICHTUNG
DISPOSITIF DE RÉGULATION DE FLUX À SOUPAPE

(30) Priority: 16.02.2007 US 676134
(43) Date of publication of application: 25.11.2009
(73) Proprietor: Fisher Controls International LLC, St. Louis, MO 63136 (US)
(72) Inventor: GETHMANN, Douglas, Paul, Gladbrook, IA 50635 (US)
(74) Representative: Bohnenberger, Johannes
(86) International application number: PCT/US2008/052177
(87) International publication number: WO 2008/100697

(56) References cited:
- EP-A- 0 666 521
- FR-A- 2 228 996
- US-A- 5 823 509

## Description

### FIELD OF THE DISCLOSURE

The disclosure relates generally to control valves having a valve stem movable for flow rate adjustment and, more particularly, to travel limiters for such valve stems to adjust maximum available flow rate.
Such valves have been disclosed in documents EP0666521 or FR 2228996, for example.

### BACKGROUND

Typically, a control valve includes a fluid inlet passage coupled through an ori fice to a fluid outlet passage and a closure member disposed in the orifice, which controls the amount of fluid flow therethrough. The closure member may include a valve plug having a surface which engages the orifice forming a valve seat. During operation of a process control system, a process controller may issue a command signal to a control valve to move the valve plug toward or away from engagement with the valve seat to provide a desired fluid flow through the orifice and, therefore, the control valve.

Control valves typically experience variable process conditions during their lifetime. A gas well, for example, may have high pressure when first drilled, but decreasing pressure over time. To maintain constant fluid flow as pressure decreases, the valve must either be disassembled to install a valve seat having a larger flow passage or must be adjusted to allow the valve plug to travel farther from the valve seat to open more port area.

Thus, as a first alternative, to ensure that the valve will achieve the desired flow parameters, separate sets of valve plugs and valve seats may be installed. However, replacement of a valve plug and/or valve seat can necessitate disassembly and reassembly of the valve, which results in additional labor, and additional time the control valve is out of service. Accordingly, it is desirable to be able to achieve a plurality of desired flow parameters by using a single valve plug and a single valve seat.

There are devices which work in conjunction with a valve stem to provide multiple stem travel limits, such as are shown in U.S. Patent No. 6,905,108. However, the known devices tend to be fairly expensive and difficult to remove and install. This may be due to the tendency to require serrations or threads along the valve stem, as well as along the internal surface of the travel limiting device which engages the valve stem. Also, the devices tend to require removable bolts to fasten pieces together, which may create problems concerning adequate access for manipulation of tools to assemble and disassemble the device, as well as having to deal with multiple loose parts which require care in handling so as not to drop them, while at the same time the difficulty of achieving proper thread alignment when installing bolts, etc.

The more difficult and time consuming manipulation involved with the prior art devices can be particularly challenging when an operator is wearing gloves, such as may be necessary in a cold environment. Given that control valves often are directly mounted on a well head and must cycle, making a change with the prior art devices also tends to require that the system be shut down to avoid the normal movement of the valve stem when the control valve cycles. The time required to remove the prior art devices also is important when an operator needs to completely remove the device, such as to allow the valve to be flushed. Thus, it would be preferable if each maximum flow rate change and flushing operation could be accomplished with less downtime of the control valve, resulting in greater productivity.

### SUMMARY OF THE INVENTION

In accordance with the invention, these is provided a valve having a housing that has a fluid inlet passage and a fluid outlet passage, with an orifice disposed between the fluid inlet passage and the fluid outlet passage. The apparatus further includes a valve plug adapted to move with respect to the orifice to vary the flow of fluid between the fluid inlet passage and the fluid outlet passage, a valve stem connected to the valve plug, with the valve stem having a shoulder disposed along a length of the valve stem that is disposed outside of the housing. The apparatus also includes a valve flow adjustment device having concentric first and second bores having respective different diameters, the valve flow adjustment device being removably connected to the valve stem and engageable with the shoulder, such that the valve flow adjustment device provides two preselected positions that limit the valve.stem travel and correspond to two different maximum flow capacities of the valve.

The valve flow can be adjusted from the first preselected position to the second preselected position by inverting the valve flow adjustment device to a position above the shoulder. The first bore opens downward when the valve flow adjustement device is in the first preselected position and the first bore opens upward when the valve flow device is in the second preselected position.

The device further includes a removable collar having a passage therethrough formed by concentric first and second bores, the first bore having a first diameter and the second bore having a relatively larger second diameter. The collar also slidably engages the portion of the valve stem extending above the shoulder, and has two preselected positions for engagement with the shoulder with the two preselected positions being adapted to limit movement of the valve stem to two different maximum travel positions. The device further includes a collar having at least two portions that when joined form a longitudinal passage therethrough having concentric first and second bores, the first bore having a first diameter and the second bore having a relatively larger second diameter, and a radially extending transition wall where the first and second bores meet within the collar. The device also includes a connector adapted to join the at least two collar portions to slidably engage the portion of the valve stem extending above the shoulder.

With the example constructions, a flow adjustment device is provided that limits the travel of a valve stem. The device may include one or more pieces that form a removable, reversible collar around the valve stem. The collar has a passage therethrough having two different bore sizes, with each open to a respective end of the collar. The bores can be formed by having their features cast, molded or machined into the one or more pieces that form the collar. In accordance with the valve flow adjustment device, the flow adjustment device may be assembled to the valve stem to permit two different predetermined stem travel limits.

The valve stem requires a shoulder to engage the removable collar, but no special machining or formation of threads or concentric grooves. Thus, the shoulder may be formed in a variety of ways such as, for example, by a change in valve stem diameter, by a press fit pin at least partially protruding from the valve stem, or by a stop ring inserted in a groove around the valve stem.

Having a shoulder on the valve stem permits the collar to simply be installed in two different end-to-end configurations to vary the valve stem travel between two different predetermined settings. Depending on the orientation of the collar, if the relatively smaller bore is oriented toward the shoulder, it will contact the shoulder and limit the valve stem travel based on the full height of the collar. Alternatively, if the larger bore is oriented toward the shoulder, the shoulder will contact a transition wall formed where the passage changes from the first bore diameter to the second bore diameter, thus limiting the travel by less than the full height of the collar. Thus, the collar may be flipped end-to-end, or inverted, and reinstalled to adjust between the two predetermined valve stem travel limits.

The collar may be held in place via a snap fit, or via other means, such as a spring clip, a latch mechanism, or other fasteners, such as a holding screw or the like. Advantageously, the fastening mechanism(s) may be conveniently made to remain attached to the collar at all times, thereby eliminating the need for loose bolts or screws, and some of the special machining and assembly techniques associated therewith. In turn, the device can be quite small and compact, allowing for shorter, lighter and less expensive valve assemblies having fewer parts. Such devices will require less time to change and, therefore, are more likely to permit rapid changes during normal system operation, between strokes of the valve stem.

Thus, a flow adjustment device is provided that limits the travel of a valve stem. The device provides two different travel limits, which correspond to two different predetermined positions that may be achieved with respect to a maximum valve stem travel and thereby two different maximum flow characteristics for the valve.

The device minimizes the drawbacks of the prior art while permitting a user to quickly change the maximum flow capacity of a valve or to decouple the flow adjustment device entirely via action taken outside of, or external to, the valve housing. Indeed, the operator may be able to make a flow adjustment between strokes of the valve stem, depending on the cycle time. This not only improves productivity by not having to shut down the fluid system, but also reduces operator time and effort, which can have a significant impact financially, as well as to the comfort of an operator working in inclement weather.

It is to be understood that both the foregoing general description and the following detailed description are exemplary and provided for purposes of explanation only, and are not restrictive of the invention, as claimed. Further features and objects of the present invention will become more fully apparent from the following description of the preferred embodiments and from the appended claims.

### BRIEF DESCRIPTION OF THE DRAWINGS

FIG. 1 is a front view of a valve including a flow adjustment device.

FIG. 2 is a cross-sectional view the valve of FIG. 1.

FIG. 3 is a perspective view of a flow adjustment device mounted to a valve stem, in accordance with the example shown in FIGS. 1 and 2.

FIG. 4 is a cross-sectional view of a collar of a flow adjustment device in accordance with the example shown in FIGS. 1 and 2, in a first travel limiting orientation.

FIG. 5 is a cross-sectional view of a collar of a flow adjustment device in accordance with the example shown in FIGS. 1 and 2, in a second travel limiting orientation.

FIG. 6 is a cross-sectional view of a first alternative collar of a flow adjustment device with an integral hinge and a captive screw fastener.

FIG. 7 is a cross-sectional view of a second alternative collar of a flow adjustment device with a separable hinge and a captive screw fastener.

FIG. 8 is a cross-sectional view of a third alternative collar of a flow adjustment device with an integral hinge and an integral fastener.

FIG. 9 is a cross-sectional view of a fourth alternative collar of a flow adjustment device with a pair of identical portions, each having an integral fastener.

FIG. 10 is an example of a first alternative valve stem shaft configuration with a perpendicular shoulder formed at a change in diameter along the valve stem shaft.

FIGS. 11A and 11B show an example of a second alternative valve stem shaft configuration with a shoulder formed via a pin through the shaft.

FIGS. 12A and 12B show an example of third alternative valve stem shaft configuration with a shoulder formed via a ring disposed in a groove.

It should be understood that the drawings are not necessarily to scale.

While other plan and section views are not included, the details such views would show are considered to be adequately shown in the present views or well within the comprehension of those skilled in the art in light of the present disclosure. It also should be understood that the present invention is not limited to the examples illustrated.

### DETAILED DESCRIPTION

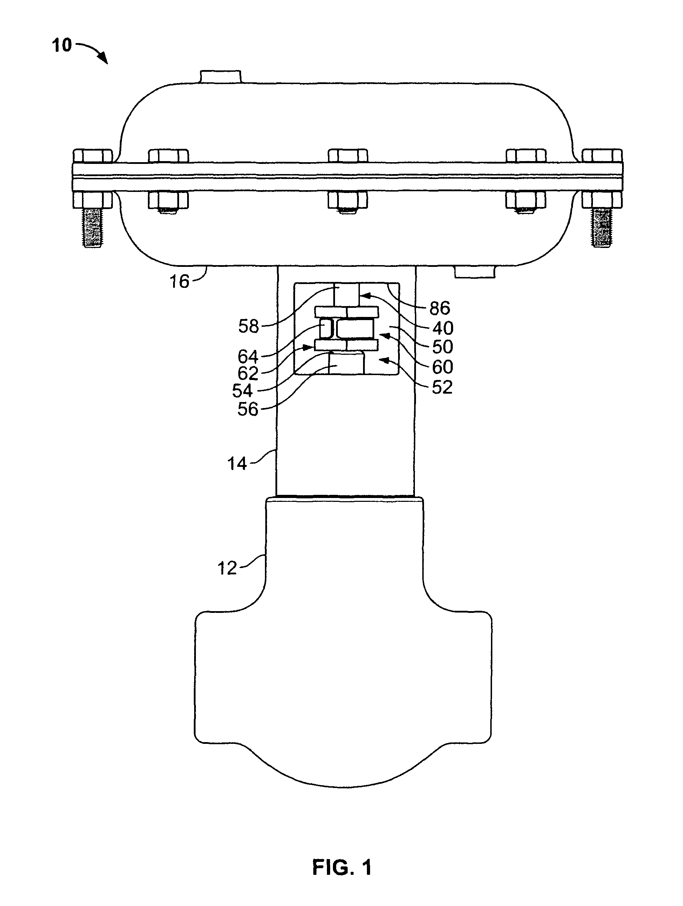

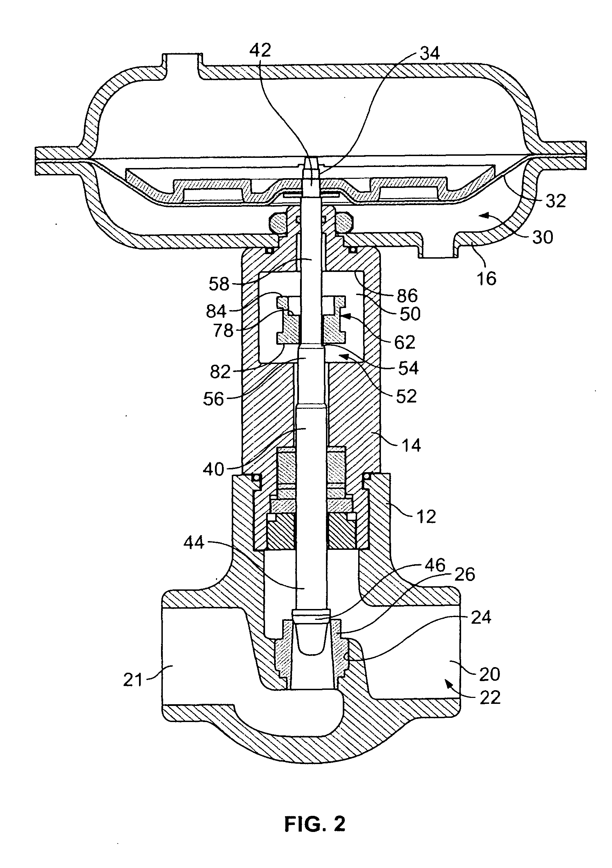

Referring now to the drawings, FIGS. 1 and 2 show an example of a control valve assembly 10 that includes a valve body 12 connected to a bonnet 14. The bonnet 14, in turn, is connected to a diaphragm casing 16. The diaphragm casing 16 houses a sliding stem actuator, which may take other forms. The sliding stem actuator can be of any suitable type for use with control valves. The control valve assembly 10 may be joined by conventional methods, such as flange mounting, to fluid piping components within a larger process control system.

Passing through the bonnet 14 is a valve stem 40. Valve stem 40 is to be coupled to and driven by the sliding stem actuator at its proximal or upper end 42. The valve stem 40 passes through the bonnet 14 and downward into the valve body 12. In this example, coupled to the lower end 44 of the valve stem 40 is a valve plug 46. The valve plug 46 includes a seating surface on its lower side. It will be appreciated that the valve stem 40 and valve plug 46 may be machined from a single piece, or may be formed in separate pieces for connection by common fastening methods.

The valve body 12 includes an inlet passage 20 and an outlet passage 21. A valve flow path 22 is formed between the inlet passage 20 and the outlet passage 21. Disposed between the inlet passage 20 and outlet passage 21 is an orifice 24. In this example, the orifice 24 receives a removable valve seat 26, although it will be appreciated that a valve seat may be integrally formed in the valve body 12 at the orifice 24. In this example, the valve plug 46 is shaped and sized to permit sealing engagement with the valve seat 26. The valve plug 46 cooperates with the valve seat 26 in the orifice 24 to control the port area through which fluid may flow from the inlet passage 20 to the outlet passage 21. Thus, the flow rate permitted through the control valve assembly 10 is controlled by the position of the valve stem 40 and, therefore, the position of the valve plug 46 relative to the valve seat 26. In FIG. 2, the valve plug 46 is shown in a closed position, with the seating surface of the valve plug 46 fully engaging the valve seat 26.

In this example, the diaphragm casing 16 houses a common diaphragm control unit 30 having a diaphragm 32 that responds to control pressures to raise or lower a central mounting hub 34, forming a sliding stem actuator in a manner well known in the art. It will be appreciated that alternative actuator units may be used. Also, the example flow adjustment device would be applicable to many types of valves having a valve stem, whether they are control valves, throttling valves or on/off valves.

By virtue of the vertical movement of the central mounting hub 34 and its coupling to upper end 42 of the valve stem 40, the valve stem 40 and valve plug 46 may move through a range of longitudinal travel in the control valve assembly 10. This range of travel includes, at one extreme, being in a closed position when the valve plug 46 is in sealing engagement with the valve seat 26, and at another extreme, being in a fully open, preselected maximum flow rate position when the valve stem 40 is moved to the full extent of its permitted travel.

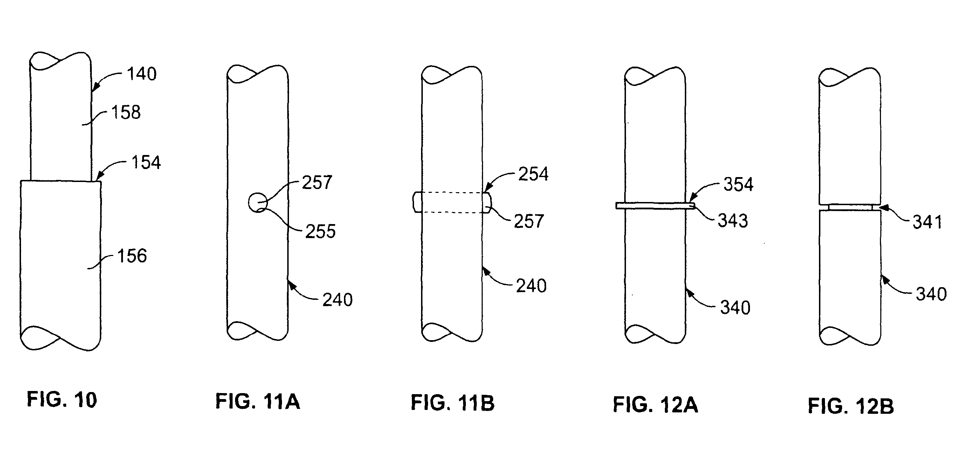

In this example, the bonnet 14 has an opening 50 by which an intermediate portion 52 of the valve stem 40 is accessible from outside of the control valve assembly 10. In turn, the exposed intermediate portion 52 of the valve stem 40 has a shoulder 54 formed by an angled transition between a lower larger diameter portion 56 and an upper relatively smaller diameter portion 58. Alternative shoulder formations will be discussed below with respect to examples shown in FIGS. 10, 11A and 11B, and 12A and 12. To selectively limit the maximum upward travel of valve stem 40, and thereby preselect a maximum flow rate position for the valve plug 46 relative to the valve seat 26, a flow adjustment device 60 may be removably connected to valve stem 40 within the opening 50 in the bonnet 14.

The flow adjustment device 60 shown in the example in FIGS. 1-5 includes a collar 62 and a clip 64 that may be combined to achieve two alternative valve stem travel limits. The collar 62 may be formed of one or more pieces and is shown as a two-piece assembly having a first collar portion 66 and a second collar portion 68. First collar portion 66 and second collar portion 68 may be formed of a variety of materials, such as plastics, metals or the like, and may be molded or formed by other conventional means. The collar portions 66 and 68 also are configured to be joined to form the collar 62 which encircles the valve stem 40.

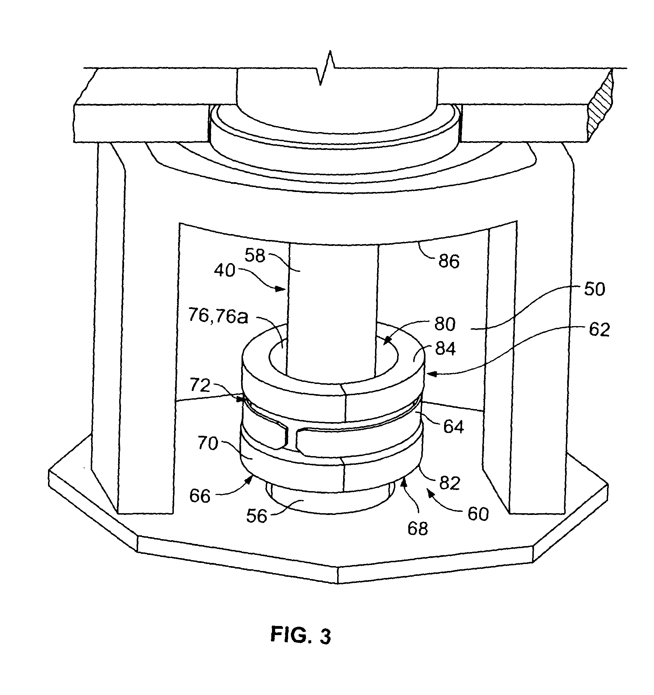

In the example shown, each of the collar portions 66 and 68 has an outer wall 70 having a groove or channel 72 formed therein, and has stepped inner walls 74 and 76 formed as semi-circular arcuate reliefs, with a wall 78 at the transition therebetween. The clip 64 is preferably formed of spring metal and in this example has a band shape that is complimentary to the channel 72 of the collar portions 66 and 68. With this example configuration, the collar 62 may be formed by joining collar portions 66 and 68 when the clip 64 is installed in the channel 72 around both portions, as shown in FIGS. 1 and 3. For clearer viewing of the structure of the collar 62, the clip 64 is removed in FIGS. 2, 4 and 5.

When the collar portions 66 and 68 are held together to form the collar 62, the semi-circular arcuate inner walls 74 and 76 of each of the collar portions 66 and 68 collectively form a passage 80 through collar 62 having a first bore 74a and a second bore 76a. The inner diameter of first bore 74a is slightly larger than the outer diameter of the smaller diameter portion 58 of the valve stem 40, but is smaller than the outer diameter of the larger diameter portion 56 of the valve stem 40. The inner diameter of the second bore 76a is larger than the lager diameter portion 56 of the valve stem 40.

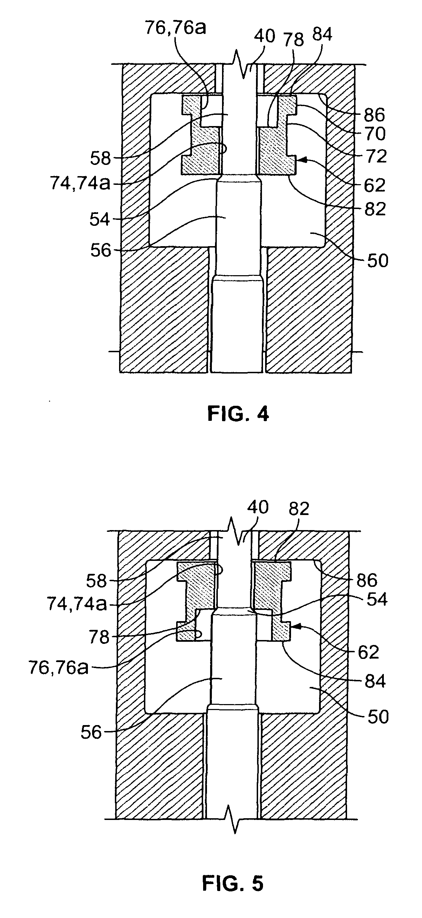

As can be best seen in FIGS. 4 and 5, the collar 62 may be installed on valve stem 40 in a first orientation wherein the smaller first bore 74a is open to a first end 82 of the collar 62. In this orientation, due to the smaller first bore 74a being smaller than the larger diameter portion 56 of the valve stem 40, the first end 82 of the collar 62 will engage the shoulder 54 on the valve stem 40. As the valve stem 40 is moved upward its maximum travel will be limited when a second end 84 of the collar 62 engages an upper surface 86 of the opening 50 in the bonnet 14. This is shown in FIG. 4 and corresponds to a first preselected maximum travel of the valve stem 40, and thereby to a first preselected maximum flow rate of the control valve assembly 10.

As shown in FIG. 5, a second preselected maximum travel of the valve stem 40, and thereby a second preselected maximum flow rate may be selected if the clip 64 is removed and the collar portions 66 and 68 are temporarily removed, inverted and then reinstalled on the valve stem 40. By effectively flipping over or inverting the collar 64 on the valve stem 40, the relatively larger second bore 76a that is open to the second end 84 of the collar will allow the collar 62 to move downward on the valve stem 40 until the wall 78 in the collar 62 engages the shoulder 54. In this second orientation, the valve stem 40 is permitted to move further upward until the first end 82 of the collar 62 engages the upper surface 86 of the opening 50 in the bonnet 14. The further permitted movement in this second orientation allows the valve plug 46 to move further from the valve seat 26, so as to open more port area, and thereby corresponds to a second preselected maximum flow rate of the control valve assembly 10.

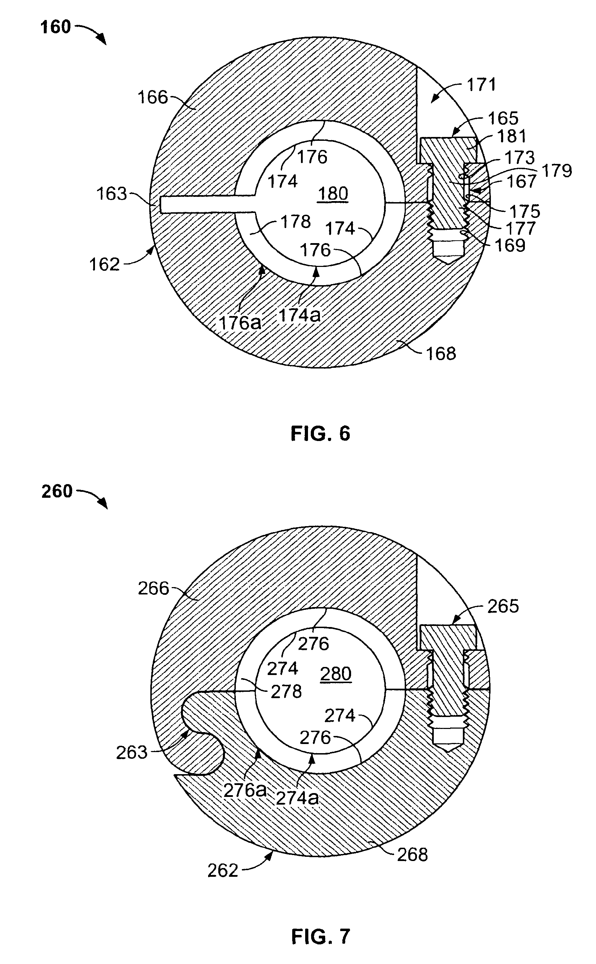

In FIG. 6, an example of an alternative flow adjustment device 160 is shown in cross-section. In this example, the flow adjustment device 160 includes a collar 162 having collar portions 166 and 168 connected along one side by an integrally formed hinge 163. The collar portions 166 and 168 are connected along their other sides by a fastener 165 that passes through an opening 167 in first collar portion 166 and is received in threaded bore 169 in second collar portion 168. The opening 167 in the first collar portion 166 is in a recessed notch 171 and has a first threaded portion 173 and a second larger diameter unthreaded portion 175. In this example, fastener 165 is formed with threads 177 at its distal end and a smaller diameter unthreaded shaft 179 between the distal threaded end and a cap head 181. It will be appreciated that this arrangement provides a captive threaded fastener that may be tightened to draw collar portions 166 and 168 together and may be loosened to permit the collar 162 to be opened along one side and hinged along the opposite side at integral hinge 163, while the fastener 165 remains coupled to the first collar portion 166. The captive fastener 165 and integral hinge 163 keep the flow adjustment device 160 together as an assembly, even when being removed, thereby eliminating the concern of dropping fasteners.

As with the example shown in FIGS. 1-5, each collar portion 166 and 168 of the alternative collar shown in FIG. 6 has semi-circular arcuate inner walls 174 and 176. When collar portions 166 and 168 are brought together, as shown in FIG. 6, they collectively form a passage 180 through collar 162 having a first bore 174a and a second relatively larger bore 176a. A wall 178 is formed at the transition between the two bores. These features allow the alternative collar 162 to be used in two flow adjustment positions, in the same manner as the above described collar 62. Given the integral hinge 163, the collar 162 is particularly well suited for being produced as a single molded plastic piece. The fastener 165 may be made of any suitable material, such as metal, plastic or other composite materials.

Turning to FIG. 7, a second alternative example of a flow adjustment device 260 is shown in cross-section. In this example, the flow adjustment device 260 includes a collar 262 having collar portions 266 and 268, configured with corresponding arcuate portions to form a hinge 263. The flow adjustment device 260 includes a fastener 265, and is otherwise constructed in the same manner as collar portions 166 and 168, and respective fastener 165. Thus, each collar portion 266 and 268 of the second alternative collar shown in FIG. 7 has semi-circular arcuate inner walls 274 and 276. Accordingly, when collar portions 266 and 268 are brought together, as shown in FIG. 7, they collectively form a passage 280 through collar 262 having a first bore 274a and a second relatively larger bore 276a. A wall 278 is fouled at the transition between the two bores and these features allow the alternative collar 262 to be used similarly to the above examples in two flow adjustment positions. Also, given that the collar portions 266 and 268 are separable, the collar 262 may be manufactured using metal, plastic or other composite materials. As with the prior example, the fastener 265 may be made of any suitable material.

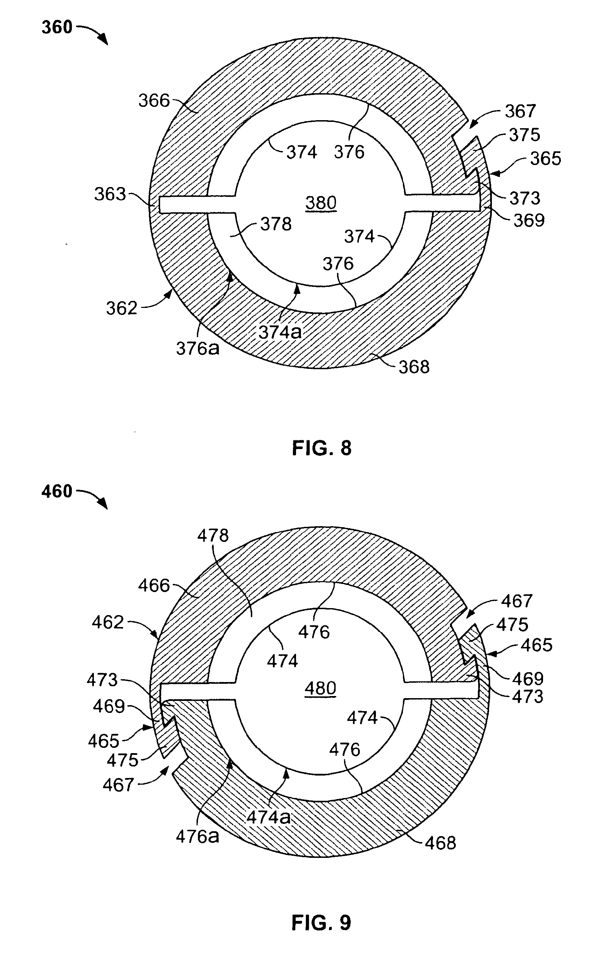

A third alternative flow adjustment device 360 is shown in cross-section in FIG. 8. In this example, the flow adjustment device 360 includes a collar 362 having collar portions 366 and 368 connected along one side by an integrally formed hinge 363. The collar portions 366 and 368 are connected along their other sides by a fastener 365. Fastener 365 includes a notch 367 in first collar portion 366 that receives a latch arm 369 extending from second collar portion 368. The notch 367 in the first collar portion 366 provides a recess and a lip 373 that engages a lug 375 on the latch arm 369. In this example, fastener 365 can be engaged by bringing notch 367 and latch arm 369 together with a squeezing motion. Fastener 365 may be released by prying the latch arm 369 outward, so that lug 375 rides over and is free of lip 373.

It will be appreciated that this arrangement provides an integral fastener that may be engaged without use of any tools and may be removed by merely prying latch arm 369 to permit the collar 362 to be opened along the fastener side and hinged along the opposite side at integral hinge 363. Thus, the example in FIG. 8 permits fabrication of the flow adjustment device 360 in one piece. In this example, the integral hinge 363 and fastener 365 make the collar 362 and fastener 365 particularly well suited for being produced as a single molded plastic piece, or the like.

As with the earlier examples shown in FIGS. 1-7, each collar portion 366 and 368 of the third alternative collar shown in FIG. 8 has semi-circular arcuate inner walls 374 and 376. When collar portions 366 and 368 are brought together, as shown in FIG. 8, they collectively form a passage 380 through collar 362 having a first bore 374a and a second relatively larger bore 376a. A wall 378 is formed at the transition between the two bores. These features allow the alternative collar 362 to be used, similarly to the above examples, as a flow adjustment device in first and second flow adjustment positions.

A fourth alternative flow adjustment device 460 is shown in cross-section in FIG. 9. In this example, the flow adjustment device 460 includes a collar 462 having collar portions 466 and 468. Collar portions 466 and 468 are shown as being identical, and each has fastener portions 465 including a notch 467 with a lip 473 at one end, and a latch arm 469 with a lug 475 at the other end. The two collars may be snapped together or separated by prying a latch arm 469, in a manner similar to that described with respect to the example in FIG. 8. It will be appreciated that this arrangement provides an integral fastener on each collar portion, making the collar portions 466 and 468 well suited for fabrication as plastic molded pieces, or the like.

The collar portions 466 and 468 have arcuate inner walls 474 and 476, similar to the examples shown in FIGS. 1-8, with a wall 478 formed at the transition between the two bores 474a and 476a that form a passage 480 when the collar portions 466 and 468 are coupled together. As with the above examples, these features allow this alternative collar 462 to be used in a similar manner to provide two flow adjustment positions. With respect to the above examples, it will be appreciated that the collar portion of a flow adjustment device may be formed or provided in a variety of ways.

FIG. 10 presents a first alternative example of a formation of a shoulder on a valve stem for use with any of the above described collar portions of a flow adjustment device. In particular, a portion of a valve stem 140 is shown proximate a shoulder 154. In this example, the shoulder 154 is formed as a wall at the transition from a lower larger diameter portion 156 to an upper relatively smaller diameter portion 158. The diameters of the respective portions 156 and 158 are sized to cooperate with the example collars, as discussed with respect to the first example shown in FIGS. 1-5. The shoulder 154 may be made by machining or other fabrication to generate the difference in respective shaft diameters.

FIGS. 11A and 11B present a second alternative example of a formation of a shoulder on a valve stem for use with the above collar portions of a flow adjustment device. Here, the valve stem 240 has a common diameter both above and below a shoulder 254. The shoulder 254 is formed by an aperture 255 through the valve stem 240 and a pin 257 inserted in the aperture 255. At least one end of the pin 257 extends outward from the valve stem 240 for engagement with a collar portion. As will be appreciated by one of ordinary skill in the art, the pin 257 must be sized for retention in the aperture 255, and of a length that is slightly less than the diameter of the inner relatively larger bore 76a of the collar portion, to properly provide two flow adjustment positions of the collar. The pin may be formed of a suitable relatively rigid material.

A third alternative example of a formation of a shoulder on a valve stem is shown in FIGS. 12A and 12B. In this example, a portion of a valve stem 340 is shown having a common shaft diameter, except for a groove 341, formed such as by machining. As will be appreciated by one of ordinary skill in the art, the groove 341 receives a corresponding clip 343 to provide a shoulder 354 by means of a localized increase in diameter of the valve stem 340. As noted with respect to the length of the pin 257 above, the clip 343 must have an outer diameter that is slightly smaller than the diameter of the inner relatively larger bore 76a of the collar portion. By using a clip 343, this construction advantageously permits use of a shaft having a common diameter, except for the small groove 341. With respect to the above examples, it will be appreciated that the shoulder on the valve stem may be formed or provided in a variety of ways.

Thus, each of the above examples provides a simplified adjustment device that is external to the valve body, yet can create variable effective port sizes by adjusting the fully opened position of a valve plug relative to an orifice, via a valve stem travel limiter. This is a significant improvement over the conventional, more time consuming and, therefore, more expensive practice of having to open the control valve to replace the valve seat or valve plug to change the potential maximum port area, while also providing an improvement over other afore-mentioned more complicated and expensive valve stem and flow adjustment device combinations.

Although certain example devices and articles of manufacture have been described herein, the scope of coverage is not limited thereto. It will be apparent to those skilled in the art that various modifications can be made in the design and construction of such flow adjustment devices and cooperating valve stems without departing from the scope of the present invention as claimed, and that the claims are not limited to the illustrated examples. Thus, while a flow adjustment device may be provided using any variety of suitable materials of construction, configurations, shapes and sizes for the components and methods of connecting the components, this application covers all devices and articles of manufacture fairly falling within the scope of the appended claims.

## Claims

1. A valve comprising :
a housing having a fluid inlet passage (20) and a fluid outlet passage (21);
an orifice (24) disposed between the fluid inlet passage and the fluid outlet passage;
a valve plug (46) adapted to move with respect to the orifice to vary the flow of fluid between the fluid inlet passage and the fluid outlet passage;
a valve stem (40) connected to the valve plug, the valve stem having a shoulder (54) disposed along a length of the valve stem that is disposed outside of the housing, **characterized by** that:
a valve flow adjustment device (60) having concentric first (74a) and second (76a) bores having respective different diameters, the valve flow adjustment device being removably connected to the valve stem (40) and engageable with the shoulder, wherein the valve flow adjustment device (60) provides two preselected positions that limit the valve stem travel and correspond to two different maximum flow capacities of the valve; and
wherein the valve flow can be adjusted from the first preselected position to the second preselected position by inverting the valve flow adjustment device (60) to a position above the shoulder (54), and wherein the first bore (74a) opens downward when the valve flow adjustment device is in the first preselected position, and the first bore (74a) opens upward when the valve flow device is in the second preselected position.

2. A valve as defined in claim 1, wherein the shoulder is formed at a location along the valve stem where the valve stem has an increase in diameter.

3. A valve as defined in claim 1, wherein the shoulder is formed on a portion of the valve stem having an aperture in the valve stem and a pin received in the aperture and extending outward from the valve stem.

4. A valve as defined in claim 1, wherein the shoulder is formed by a ring received in a recessed groove in the valve stem.

5. A valve as defined in claim 1, wherein the valve flow adjustment device further comprises at least two collar portions that together encircle and slidably engage the valve stem above the shoulder, wherein preferably the valve flow adjustment device further comprises a removable clip that holds the at least two collar portions together.

6. A valve as defined in claim 5, wherein the at least two collar portions are part of a unitary molded piece, wherein preferably the unitary molded piece further comprises an integral hinge between the at least two collar portions, and wherein the unitary molded piece further preferably comprises a fastener that is adapted to hold the at least two collar portions together in a position encircling the valve stem above the shoulder.

7. A valve as defined in claim 1, wherein the valve flow can be adjusted from the one preselected position to the second preselected position by removing the collar, inverting the collar and reconnecting the collar to the valve in a position above the shoulder.

8. A valve as defined in claim 1, the valve flow adjustment device further comprising:
a removable collar having a passage therethrough formed by concentric first and second bores, the first bore having a diameter and the second bore having a relatively larger second diameter, wherein the collar slidably engages the portion of the valve stem extending above the shoulder; and
the collar has two preselected positions for engagement with the shoulder, wherein the two preselected positions are adapted to limit movement of the valve stem to two different maximum travel positions.

9. A valve as defined in claim 8, wherein the collar is formed of at least two portions,
wherein preferably the at least two collar portions are entirely separable,
and
wherein further preferably the at least two collar portions are connected to each other by a clip when in either of the two preselected positions.

10. A valve as defined in claim 8, wherein the first bore opens downward when the collar is in the first preselected position, and wherein the first bore opens upward when the collar is in the second preselected position.

11. A valve as defined in claim 1, wherein a portion of the valve stem extends above the shoulder, the valve flow adjustment device further comprising:
a collar having at least two portions that when joined form a longitudinal passage therethrough having concentric first and second bores, the first bore having a first diameter and the second bore having a relatively larger second diameter, and a radially extending transition wall where the first and second bores meet within the collar; and
a connector adapted to join the at least two collar portions to slidably engage the portion of the valve stem extending above the shoulder.

12. A valve as defined in claim 11, wherein the collar further comprises an annular groove when the at least two portions are joined and the annular groove receives the connector to hold the at least two portions adjacent to each other.

13. A valve as defined in claims 8 or 11, wherein the at least two portions of the collar are independent separable pieces.

14. A valve as defined in claims 8 or 11, wherein the at least two portions of the collar are connected to each other by a hinge, wherein preferably the at least two portions of the collar are connected to each other as part of a unitary molded piece.

15. A valve as defined in claim 11, wherein the collar has a first flow adjustment position wherein the first bore opens downward and a second flow adjustment position wherein the first bore opens upward.

## Patentansprüche

1. Ventil, Folgendes aufweisend:
ein Gehäuse mit einem Fluideinlassdurchgang (20) und einem Fluidauslassdurchgang (21);
eine Öffnung (24), die zwischen dem Fluideinlassdurchgang und dem Fluidauslassdurchgang angeordnet ist;
einen Ventilstopfen (46), der dazu angepasst ist, sich im Hinblick auf die Öffnung zu bewegen, um den Fluidstrom zwischen dem Fluideinlassdurchgang und dem Fluidauslassdurchgang zu variieren;
einen mit dem Ventilstopfen verbundenen Ventilschaft (40), wobei der Ventilschaft eine entlang einer Länge des Ventilschafts angeordnete Schulter (54) hat, die außerhalb des Gehäuses angeordnet ist, **gekennzeichnet durch**:
eine Ventildurchflusseinstellvorrichtung (60) mit einer konzentrischen ersten (74a) und zweiten (76a) Bohrung mit jeweiligen unterschiedlichen Durchmessern, wobei die Ventildurchflusseinstellvorrichtung abnehmbar mit dem Ventilschaft (40) verbunden ist und mit der Schulter in Eingriff gebracht werden kann, wobei die Ventildurchflusseinstellvorrichtung (60) zwei vorausgewählte Positionen bereitstellt, die den Ventilschaftweg begrenzen und zwei unterschiedlichen Höchstdurchflusskapazitäten des Ventils entsprechen; und
wobei der Ventildurchfluss von der ersten vorausgewählten Position zur zweiten vorausgewählten Position eingestellt werden kann, indem die Ventildurchflusseinstellvorrichtung (60) zu einer Position über der Schulter (54) umgewendet wird, und wobei die erste Bohrung (74a) nach unten mündet, wenn sich die Ventildurchflusseinstellvorrichtung in der ersten vorausgewählten Position befindet, und die erste Bohrung (74a) nach oben mündet, wenn sich die Ventildurchflusseinstellvorrichtung in der zweiten vorausgewählten Position befindet.

2. Ventil nach Anspruch 1, wobei die Schulter an einer Stelle entlang des Ventilschafts ausgebildet ist, an der der Ventilschaft eine Durchmesserzunahme aufweist.

3. Ventil nach Anspruch 1, wobei die Schulter an einem Abschnitt des Ventilschafts ausgebildet ist, der eine Öffnung im Ventilschaft und einen in der Öffnung aufgenommenen Stift aufweist und sich vom Ventilschaft nach außen erstreckt.

4. Ventil nach Anspruch 1, wobei die Schulter durch einen Ring gebildet ist, der in einer im Ventilschaft ausgesparten Nut aufgenommen ist.

5. Ventil nach Anspruch 1, wobei die Ventildurchflusseinstellvorrichtung darüber hinaus mindestens zwei Ansatzabschnitte umfasst, die zusammen den Ventilschaft über der Schulter umgeben und verschiebbar in Eingriff nehmen, wobei die Ventildurchflusseinstellvorrichtung vorzugsweise darüber hinaus eine abnehmbare Klammer umfasst, die die mindestens zwei Ansatzabschnitte zusammenhält.

6. Ventil nach Anspruch 5, wobei die mindestens zwei Ansatzabschnitte Teil eines einheitlichen Formteils sind, wobei das einheitliche Formteil vorzugsweise darüber hinaus eine integrale Anlenkung zwischen den mindestens zwei Ansatzabschnitten umfasst, und wobei das einheitliche Formteil darüber hinaus vorzugsweise ein Befestigungsmittel umfasst, das dazu ausgelegt ist, die mindestens zwei Ansatzabschnitte in einer den Ventilschaft über der Schulter umgebenden Position zusammenzuhalten.

7. Ventil nach Anspruch 1, wobei der Ventildurchfluss von der einen vorausgewählten Position zur zweiten vorausgewählten Position eingestellt werden kann, indem der Ansatz abgenommen, der Ansatz umgewendet und der Ansatz an einer Position über der Schulter wieder mit dem Ventil verbunden wird.

8. Ventil nach Anspruch 1, wobei die Ventildurchflusseinstellvorrichtung darüber hinaus umfasst:
einen abnehmbaren Ansatz mit einem durch diesen hindurchgehenden Durchgang, der durch eine konzentrische erste und zweite Bohrung gebildet ist, wobei die erste Bohrung einen Durchmesser und die zweite Bohrung einen relativ größeren zweiten Durchmesser hat, wobei der Ansatz den sich über der Schulter erstreckenden Abschnitt des Ventilschafts verschiebbar in Eingriff nimmt; und
der Ansatz zwei vorausgewählte Positionen zum Eingriff mit der Schulter hat, wobei die zwei vorausgewählten Positionen dazu ausgelegt sind, eine Bewegung des Ventilschafts auf zwei unterschiedliche maximale Wegpositionen zu begrenzen.

9. Ventil nach Anspruch 8, wobei der Ansatz aus mindestens zwei Abschnitten besteht,
wobei die mindestens zwei Ansatzabschnitte vorzugsweise vollständig trennbar sind,
und
wobei darüber hinaus die mindestens zwei Ansatzabschnitte, wenn sie sich in einer der beiden vorausgewählten Positionen befinden, vorzugsweise durch eine Klammer miteinander verbunden sind.

10. Ventil nach Anspruch 8, wobei die erste Bohrung nach unten mündet, wenn sich der Ansatz in der ersten vorausgewählten Position befindet, und wobei die erste Bohrung nach oben mündet, wenn sich der Ansatz in der zweiten vorausgewählten Position befindet.

11. Ventil nach Anspruch 1, wobei sich ein Abschnitt des Ventilschafts über der Schulter erstreckt, wobei die Ventildurchflusseinstellvorrichtung darüber hinaus umfasst:
einen Ansatz mit mindestens zwei Abschnitten, die, wenn sie zusammengefügt sind, einen durch sie hindurchgehenden Längsdurchgang mit einer konzentrischen ersten und zweiten Bohrung haben, wobei die erste Bohrung einen ersten Durchmesser und die zweite Bohrung einen relativ größeren zweiten Durchmesser hat, und eine sich radial erstreckende Übergangswand, an der die erste und zweite Bohrung im Inneren des Ansatzes aufeinandertreffen; und
einen Verbinder, der dazu ausgelegt ist, die mindestens zwei Ansatzabschnitte so zusammenzufügen, dass sie den sich über der Schulter erstreckenden Abschnitt des Ventilschafts verschiebbar in Eingriff nehmen.

12. Ventil nach Anspruch 11, wobei der Ansatz darüber hinaus eine Ringnut umfasst, wenn die mindestens zwei Abschnitte zusammengefügt sind, und die Ringnut den Verbinder aufnimmt, um die mindestens zwei Abschnitte aneinander anliegend zu halten.

13. Ventil nach Anspruch 8 oder 11, wobei es sich bei den mindestens zwei Abschnitten des Ansatzes um unabhängige, trennbare Teile handelt.

14. Ventil nach Anspruch 8 oder 11, wobei die mindestens zwei Abschnitte des Ansatzes durch eine Anlenkung miteinander verbunden sind, wobei die mindestens zwei Abschnitte des Ansatzes vorzugsweise als Teil eines einheitlichen Formteils miteinander verbunden sind.

15. Ventil nach Anspruch 11, wobei der Ansatz eine erste Durchflusseinstellposition, in der die erste Bohrung nach unten mündet, und eine zweite Durchflusseinstellposition hat, in der die erste Bohrung nach oben mündet.

## Revendications

1. Soupape comprenant :
un boîtier ayant un passage d'entrée de fluide (20) et un passage de sortie de fluide (21) ;
un orifice (24) disposé entre le passage d'entrée de fluide et le passage de sortie de fluide ;
un bouchon de soupape (46) adapté pour se déplacer par rapport à l'orifice afin de modifier le débit du fluide entre le passage d'entrée de fluide et le passage de sortie de fluide ;
une tige de soupape (40) raccordée au bouchon de soupape, la tige de soupape ayant un épaulement (54) disposé le long d'une longueur de la tige de soupape qui est disposée à l'extérieur du boîtier, **caractérisée en ce que** :
un dispositif d'ajustement de débit de soupape (60) ayant des premier (74a) et deuxième (76a) alésages concentriques ayant différents diamètres respectifs, le dispositif d'ajustement de débit de soupape étant raccordé de manière amovible à la tige de soupape (40) et pouvant se mettre en prise avec l'épaulement, dans laquelle le dispositif d'ajustement de débit de soupape (60) propose deux positions présélectionnées qui limitent le déplacement de la tige de soupape et correspondent à deux différentes capacités de débit maximum de la soupape ; et
dans laquelle le débit de la soupape peut être ajusté de la première position présélectionnée à la deuxième position présélectionnée en inversant le dispositif d'ajustement de débit de soupape (60) dans une position située au-dessus de l'épaulement (54), et dans laquelle le premier alésage (74a) s'ouvre vers le bas lorsque le dispositif d'ajustement de débit de soupape est dans la première position présélectionnée, et le premier alésage (74a) s'ouvre vers le haut lorsque le dispositif de débit de soupape est dans la deuxième position présélectionnée.

2. Soupape selon la revendication 1, dans laquelle l'épaulement est formé à un emplacement le long de la tige de soupape où la tige de soupape présente une augmentation de diamètre.

3. Soupape selon la revendication 1, dans laquelle l'épaulement est formé sur une partie de la tige de soupape ayant une ouverture dans la tige de soupape et une broche reçue dans l'ouverture et s'étendant vers l'extérieur à partir de la tige de soupape.

4. Soupape selon la revendication 1, dans laquelle l'épaulement est formé par une bague reçue dans une rainure évidée dans la tige de soupape.

5. Soupape selon la revendication 1, dans laquelle le dispositif d'ajustement de débit de soupape comprend en outre au moins deux parties de collier qui encerclent ensemble et mettent en prise de manière coulissante la tige de soupape au-dessus de l'épaulement, dans laquelle de préférence, le dispositif d'ajustement de débit de soupape comprend en outre un étrier amovible qui maintient les au moins deux parties de collier ensemble.

6. Soupape selon la revendication 5, dans laquelle les au moins deux parties de collier font partie d'une pièce moulée unitaire, dans laquelle de préférence la pièce moulée unitaire comprend en outre une articulation solidaire entre les au moins deux parties de collier, et dans laquelle la pièce moulée unitaire comprend en outre de préférence une fixation qui est adaptée pour maintenir les au moins deux parties de collier ensemble dans une position encerclant la tige de soupape au-dessus de l'épaulement.

7. Soupape selon la revendication 1, dans laquelle le débit de la soupape peut être ajusté d'une position présélectionnée à une deuxième position présélectionnée en retirant le collier, en inversant le collier et en reconnectant le collier à la soupape dans une position située au-dessus de l'épaulement.

8. Soupape selon la revendication 1, le dispositif d'ajustement de débit de soupape comprenant en outre :
un collier amovible ayant un passage à travers ce dernier formé par des premier et deuxième alésages concentriques, le premier alésage ayant un diamètre et le deuxième alésage ayant un deuxième diamètre relativement plus grand, dans laquelle le collier met en prise de manière coulissante la partie de la tige de soupape s'étendant au-dessus de l'épaulement ; et
le collier a deux positions présélectionnées pour la mise en prise avec l'épaulement, dans laquelle les deux positions présélectionnées sont adaptées pour limiter le mouvement de la tige de soupape à deux positions de déplacement maximum différentes.

9. Soupape selon la revendication 8, dans laquelle le collier est formé avec au moins deux parties,
dans laquelle de préférence les au moins deux parties de collier sont entièrement séparables, et
dans laquelle, en outre, de préférence les au moins deux parties de collier sont raccordées entre elles par un étrier lorsqu'elles sont dans l'une ou l'autre des deux positions présélectionnées.

10. Soupape selon la revendication 8, dans laquelle le premier alésage s'ouvre vers le bas lorsque le collier est dans la première position présélectionnée, et dans laquelle le premier alésage s'ouvre vers le haut lorsque le collier est dans la deuxième position présélectionnée.

11. Soupape selon la revendication 1, dans laquelle une partie de la tige de soupape s'étend au-dessus de l'épaulement, le dispositif d'ajustement de débit de soupape comprenant en outre :
un collier ayant au moins deux parties qui, lorsqu'elles sont assemblées, forment un passage longitudinal à travers ce dernier, ayant des premier et deuxième alésages concentriques, le premier alésage ayant un premier diamètre et le deuxième alésage ayant un deuxième diamètre relativement plus grand, et une paroi de transition s'étendant de manière radiale où les premier et deuxième alésages se rencontrent à l'intérieur du collier ; et
un connecteur adapté pour assembler les au moins deux parties de collier pour mettre en prise de manière coulissante la partie de la tige de soupape s'étendant au-dessus de l'épaulement.

12. Soupape selon la revendication 11, dans laquelle le collier comprend en outre une rainure annulaire lorsque les au moins deux parties sont assemblées et que la rainure annulaire reçoit le connecteur pour maintenir les au moins deux parties adjacentes entre elles.

13. Soupape selon les revendications 8 ou 11, dans laquelle les au moins deux parties du collier sont des pièces indépendantes séparables.

14. Soupape selon les revendications 8 ou 11, dans laquelle les au moins deux parties du collier sont raccordées entre elles par une articulation, dans laquelle de préférence, les au moins deux parties du collier sont raccordées entre elles sous la forme d'une pièce moulée unitaire.

15. Soupape selon la revendication 11, dans laquelle le collier a une première position d'ajustement de débit, dans laquelle le premier alésage s'ouvre vers le bas et une deuxième position d'ajustement de débit dans laquelle le premier alésage s'ouvre vers le haut.
